# EUROPÄISCHE PATENTSCHRIFT

(11) **EP 2 512 744 B1**
(45) Veröffentlichungstag und Bekanntmachung des Hinweises auf die Patenterteilung: **10.09.2014**
(21) Anmeldenummer: 10785438.2
(22) Anmeldetag: 06.12.2010
(51) Int. Cl.: B25B 7/00, B25B 7/02, B25B 7/08

(54) **ZANGE**
PLIERS
PINCE

(30) Priorität: 17.12.2009 DE 102009059198
(43) Veröffentlichungstag der Anmeldung: 24.10.2012
(73) Patentinhaber: KNIPEX-WERK C. Gustav Putsch KG, 42349 Wuppertal (DE)
(72) Erfinder: SCHULTES, Stefan, 42719 Solingen (DE); SCHULZ, Günter, 42897 Remscheid (DE)
(74) Vertreter: Müller, Enno
(86) Internationale Anmeldenummer: PCT/EP2010/068925
(87) Internationale Veröffentlichungsnummer: WO 2011/082914

(56) Entgegenhaltungen:
- DE-A1- 2 604 713
- DE-A1- 10 008 854
- FR-A1- 2 137 336

## Beschreibung

Die Erfindung betrifft eine Zange nach den Merkmalen des Oberbegriffes des Anspruches 1.

Derartige Zangen sind bereits in vielfachen Ausgestaltungen bekannt geworden. Es wird beispielsweise auf die EP 331 927 A1, die DE 88 03 016 U1 und die WO 2006/108804 A1 Bezug genommen.

Aus der DE 100 08 854 A1 ist eine Schere bekannt, die auch als Zange einsetzbar sein soll, bei welcher die Drehachse vor einer Randkante, gesehen von den Griffbereichen, angeordnet ist. Weiter ist aus der DE 26 04 713 A1 eine Blechabkantzange bekannt. Die Arbeitsbereiche sind in Form sich parallel erstreckender Flächen gestaltet. Sie verlaufen in einem spitzen Winkel zu einer Gesamterstreckungsrichtung der Zange. Des Weiteren ist aus der FR 2137 336 A1 eine Kneifzange bekannt. Die Arbeitsbereiche verlaufen quer zu einer Gesamterstreckungsrichtung der Zange.

Ausgehend von einem Stand der Technik wie er bspw. aus der DE 100 08 854 A1 bekannt ist, beschäftigt sich die Erfindung mit der Aufgabe, eine Zange anzugeben, bei welcher bei möglichst hoher Kraftübersetzung ein vorteilhafter konstruktiver Aufbau erreicht ist.

Diese Aufgabe ist beim Gegenstand des Anspruches 1 gelöst, wobei darauf abgestellt ist, dass jedenfalls die geometrische Drehachse in Bezug zu einer zu den freien Enden der Arbeitsbereiche weisenden Randkante des U-Steges zu den freien Enden hin versetzt angeordnet ist.

Die im Gewerbebereich, also im Bereich der Gelenkverbindung der Zangenschenkel zueinander, in welchem Bereich die Zangenschenkel sich auch kreuzen, U-förmige Gestaltung eines der Zangenschenkel ermöglicht es, die Drehachse und den Arbeitsbereich des diesbezüglichen Zangenschenkels bezogen auf eine Längserstreckung der Zange seitlich versetzt zueinander auszubilden. Es handelt sich bevorzugt um eine einzige Gelenkstelle der Zange. Die Drehachse liegt nicht in der Flucht eines Arbeitsbereiches. Dadurch, dass weiter die Drehachse einen der U-Schenkel durchsetzt und die geometrische Drehachse in Bezug zu einer zu den freien Enden des Arbeitsbereiches weisenden Randkante des U-Steges zu den freien Enden hin versetzt angeordnet ist, ist ein größtmöglicher Bereich für die Schneiden gegeben, dies bei optimaler Übersetzung. Die Anordnung ist darüber hinaus derart, dass ein Teilbereich eines Arbeitsbereiches sich im Zuge der Öffnung der Zange, bezogen auf eine Gesamterstreckungsrichtung der Zange, relativ zu der Drehachse aus einem Bereich spitzenseitig der Zange in einen Bereich griffbereichsseitig der Zange bewegt. Diese Gestaltung ist insbesondere für Zangen förderlich, die als Mittenschneider oder dergleichen bekannt sind.

Es ist bevorzugt, dass die U-Schenkel unterschiedlich lang sind. Weiter ist bevorzugt, dass die Drehachse in dem kürzeren U-Schenkel ausgebildet ist. Die unterschiedliche Länge bezieht sich auf eine in Bezug auf Längsachsen der beiden U-Schenkel freikragende Länge. Bevorzugt ist auch, dass diese unterschiedlichen Längen in Bezug auf eine Längsachse der Zange insgesamt, wie sie weiter unten noch erläutert ist, gegeben sind.

Darüber hinaus ist bevorzugt, dass beide U-Schenkel einen zu der Zangenspitze, gebildet durch die Spitzen der Arbeitsbereiche, freikragenden Bereich bilden.

Wie im Anspruch 1 angegeben, verbindet der U-Steg die beiden U-Schenkel miteinander und weist entsprechend eine vordere, also spitzenseitig dem freien Ende der Zange zugewandte Randkante auf. Diesbezüglich ist die Drehachse, wie auch angegeben, noch vorgelagert. Bevorzugt ist auch nicht nur die geometrische Drehachse in dem angegebenen Sinne vorgelagert, sondern auch ein diesbezügliches konstruktives Teil, also beispielsweise ein Gewerbebolzen, insgesamt vorverlagert.

Im Hinblick auf die Verlagerung des Arbeitsbereichtes von der Spitzenseite zur Griffseite handelt es sich bevorzugt um einen an dem einen U-Schenkel, welcher den Arbeitsbereich dieses Zangenschenkels ausbildet, befindlichen Teilbereich des Arbeitsbereiches. Hiermit ist in weiterer Hinsicht die Anordnung der Drehachse relativ zu dem Arbeitsbereich des gewerbeseitig U-förmig geformten Zangenschenkels beschrieben. Die Gesamterstreckungsrichtung wird vornehmlich durch die Griffbereiche der Zangenschenkel, deren Erstreckungsrichtung, bzw. eine Griffachse der die Griffbereiche umfassenden Hand vorgegeben. Weiter bevorzugt erstrecken sich auch die Arbeitsbereiche im Wesentlichen in derselben Richtung. In Einzelheit können sie auch gekrümmt verlaufen, aber ausgerichtet an dieser Gesamterstreckungsrichtung.

Es ist auch bevorzugt, dass sich der Arbeitsbereich des U-förmig gebildeten Zangenschenkels beim Öffnen der Zange auf den Griffschenkel des anderen Zangenschenkels zu bewegt. Er wird also gleichsam, wenn man die Arbeitsbereiche als "oben" ansieht, nach unten bewegt.

Die freien Enden der Arbeitsbereiche befinden sich bevorzugt auch in Bezug auf die genannte Gesamterstreckungsrichtung der Zange bzw. speziell der Griffschenkel jenseits der Drehachse.

Die genannte Drehachse verläuft weiter auch bevorzugt mit seitlichem Abstand zu dem Arbeitsbereich des anderen Zangenschenkels und durchsetzt den anderen Zangenschenkel außenseitig bezüglich des Arbeitsbereiches dieses anderen Zangenschenkels.

Darüber hinaus ist bevorzugt, dass jedenfalls bei geschlossener Zange ein Arbeitsbereich jedenfalls einer der Zangenschenkel, der mit seitlichem Abstand zu der Drehachse verläuft, sich griffbereichsseitig bis über die Drehachse hinaus in Richtung auf den U-Steg erstreckt. Vorteilhafterweise kann es sich hier auch um beide Arbeitsbereiche handeln, die eine derartige Erstreckung aufweisen. Eine solche Erstreckung ist, bezogen auf den griffbereichseitigen Abschnitt, vorzugsweise bei geschlossener Zange auch sichtbar.

Weiter ist bevorzugt, dass der die Drehachse aufweisende U-Schenkel des gewerbebereichseitig U-förmig gebildeten Zangenschenkels an diesem U-Steg keinen Arbeitsbereich ausbildet. Es handelt sich nur um eine Ausbuchtung des Zangenschenkels in Richtung auf die Zangenspitze, die der lediglichen Ausbildung der Drehachse, gewöhnlich durch Aufnahme eines entsprechenden Bolzens, dient.

Die Arbeitsbereiche befinden sich bevorzugt seitlich bezogen auf eine Längsachse der Zange, die einer gemittelten Längserstreckung der Griffbereiche bzw. der schon angesprochenen Griffachse einer die Griffbereiche umschließenden Hand entspricht.

Nachstehend ist die Erfindung des Weiteren anhand der beigefügten Zeichnung erläutert, die jedoch lediglich ein Ausführungsbeispiel darstellt. Hierbei zeigt:
- Fig.1: eine Draufsicht auf die Zange;
- Fig. 2: einen Schnitt durch den Gegenstand gemäß Fig. 1, geschnitten entlang der Linie II-II;
- Fig. 3: eine Rückansicht betreffend die Darstellung gemäß Fig. 1;
- Fig. 4: die Zange gemäß Fig. 1 in geöffneter Stellung;
- Fig. 5: eine Stirnansicht der Zange gemäß Fig. 1.

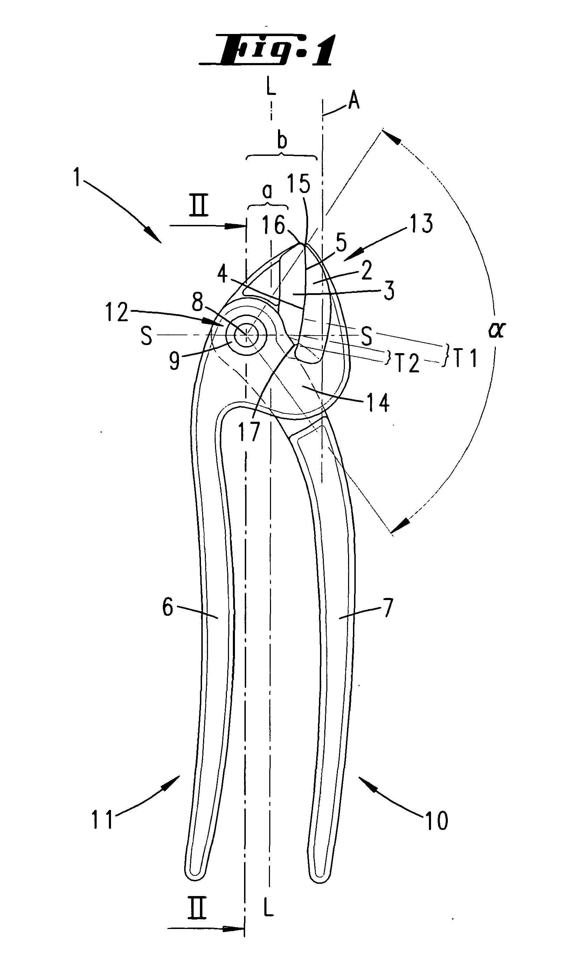

Dargestellt und beschrieben ist, zunächst mit Bezug zu Fig. 1, eine Zange 1, die als Mittenschneider ausgebildet ist. Die Arbeitsbereiche 2, 3 weisen einander zugewandte Schneiden 4, 5 auf, die im geschlossenen Zustand der Zange 1 mit ihren Schneidenspitzen gegeneinander liegen.

Die Zange weist weiter zwei Zangenschenkel 6, 7 auf, die jeweils einstückig mit dem zugehörigen Gewerbebereich, d. h. dem Bereich, in welchem die Zangenschenkel 6, 7 sich aufeinanderliegend drehen, ausgebildet sind. Weiter ist eine Drehachse 8, die beim Ausführungsbeispiel mit Hilfe des Gewerbebolzens 9 ausgebildet ist, vorgesehen. Die Zangenschenkel 6, 7 sind weiter bevorzugt einstückig mit den Arbeitsbereichen 2, 3 eines jeden Zangenschenkels ausgebildet. Es handelt sich bevorzugt und wie bei derartigen Zangen üblich, um Schmiedeteile. Die Arbeitsbereiche 2, 3 verlaufen auch jeweils mit einem seitlichen Abstand a bzw. b zu der Drehachse 8. "Arbeitsbereich" umfasst hierbei die gesamte, an den betreffenden Abschnitten des Zangenschenkels bearbeitete, beispielsweise geschliffene, Fläche zur Ausbildung der jeweiligen Schneide. Der Abstand a bzw. b ist daher ersichtlich ein mittlerer Abstand bezogen auf die beispielsweise in Fig.1 ersichtliche Gesamtflächenerstreckung eines solchen Arbeitsbereiches. Der Abstand a bzw. b entspricht bevorzugt einer, etwa abgegriffen entlang der Senkrechten S, gegebenen Abmessung eines solchen Arbeitsbereiches (- a - der einfachen Abmessung, oder mehr, bzw. dem 2-Fachen der Abmessung oder mehr - b -).

Die Zangenschenkel 6, 7 weisen im unteren Bereich bezogen auf das Gewerbe Griffbereiche 10,11 auf. "Unteren" bezieht sich hierbei auf die Darstellung der Fig.1. Weiter weist die Zange 1 eine Längsachse L-L auf. Diese entspricht auch der Gesamterstreckungsrichtung. Sie liegt etwa mittig zwischen den Zangenschenkel 6, 7 und entspricht beim Ausführungsbeispiel auch der Griffachse einer die Griffbereiche 10,11 der Zangenschenkel umfassenden Hand.

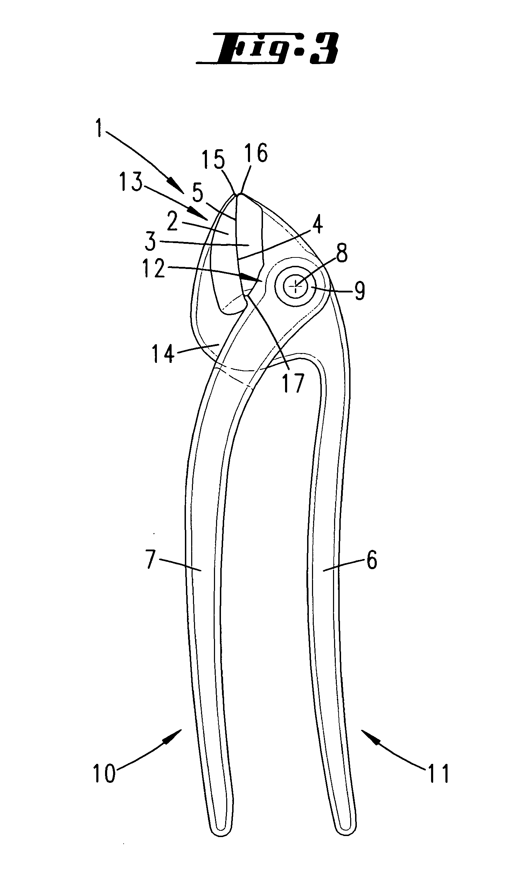

Der Zangenschenkel 6 ist in seinem Bereich welcher dem Gelenkbolzen 9 und dem Arbeitsbereich 2 zugeordnet ist, insgesamt U-förmig gebildet. Man kann einen ersten U-Schenkel 12 und einen zweiten U-Schenkel 13 unterscheiden. Die U-Schenkel 12,13 sind beim Ausführungsbeispiel integral einstückig durch den U-Steg 14 miteinander verbunden. Man kann in Einzelheit auch von einer Y-förmigen Gestaltung des Zangenschenkels 6 sprechen. Insbesondere in Bezug auf die Unteransicht gemäß Fig. 3.

Die U-Schenkel weisen jeweils eine Längsachse auf. Bezüglich des U-Schenkels 12 fällt die Längsachse mit der in Fig.1 dargestellten Schnittlinie II-II zusammen. Bezüglich des U-Schenkels 13 ist auf die Längsachse A zu verweisen.

Der U-Steg 14 bildet eine zu den freien Enden 15,16 der Arbeitsbereiche 2, 3 weisende Randkante 17 aus. Die Drehachse 8 ist zu den freien Enden 15,16 der Zange 1 hin versetzt bezüglich der genannten Randkante 17 angeordnet. Beim Ausführungsbeispiel zeigt sich dies auch daran, dass die bereits genannte Senkrechte S auf die Längsachse L-L, gelegt durch die Drehachse 8, oberhalb, d. h. auf der Seite der freien Enden 15,16 der Arbeitsbereiche bezüglich der Randkante 17 verläuft.

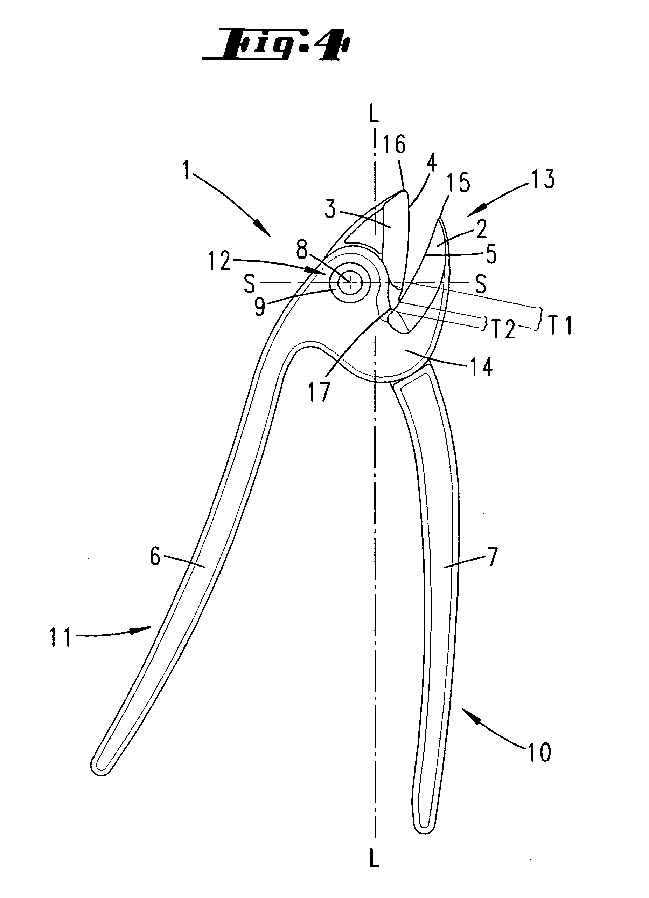

Im Zuge der Öffnung der Zange, siehe auch die geöffnete Stellung gemäß Fig. 4, bewegt sich ein Teilbereich T1 des Arbeitsbereiches 2 bzw. konkret der Schneidenausbildung 5 des Zangenschenkels 6 von einem Bereich spitzenseitig der Zange 1, bezogen auf die Drehachse 8 und die genannte Senkrechte S, zu einem Bereich griffschenkelseitig der Drehachse 8 bzw. der genannten Senkrechten S. Es lässt sich so ein sehr vorteilhaftes Hebelverhältnis bezüglich eines von der Zange beispielsweise zu schneidenden Drahtes oder dgl., der dann bis an den U-Steg 14, dessen Randkante 17 heran oder möglichst weit herangelegt werden kann, erreichen.

Bei dem dargestellten Ausführungsbeispiel ist auch vorgesehen, dass bei geschlossener Zange, siehe Fig. 1, ein Teilbereich T2 sich griffbereichsseitig jenseits, d. h. unterhalb der Drehachse 8 erstreckt. Dies auch hier bezogen auf eine Senkrechte S zu der wesentlichen Erstreckungsrichtung der Griffschenkel 10, 11, dargestellt in der Zeichnung durch die Längsachse L-L der Zange 1.

T1 ist auch bevorzugt größer als T2. T2 entspricht weiter bevorzugt 1/20 bis 1/3 der Länge des Arbeitsbereiches, gemessen in Erstreckungsrichtung des Arbeitsbereiches 2 des Zangenschenkels 6, an welchem die Bereiche T1 bzw. T2 zu erkennen sind. Hierbei ist in weiterer Einzelheit T2 bevorzugt mit 1/3 bis 2/3 der Länge von T1 vorgesehen. Bezüglich der genannten Bandbreiten der Längen von T1 bzw. T2 sind hiermit auch alle Zwischenwerte, insbesondere in 1/10-Schritten bzw.1/10 Bereichsgrenzen-Schritten, in die Offenbarung mit einbezogen.

Der Arbeitsbereich 5 des Zangenschenkels 6 ist darüber hinaus bevorzugt auf den Bereich des U-Schenkels 13 beschränkt. Im Bereich des U-Steges ist bevorzugt kein Arbeitsbereich ausgebildet. Die Randkante 17 ist bevorzugt nicht als Schneidkante ausgebildet. Der U-Schenkel 12 endet freikragend in Richtung auf die Zangenspitze. Beim Ausführungsbeispiel mit einem kreisförmigen Kantenabschnitt, wobei der Kreis mit einem Mittelpunkt in der Drehachse 8 gebildet ist.

Dem Teilbereich T2 liegt ein entsprechender Teilbereich des Arbeitsbereiches 3 bzw. konkret der Schneidkante 4 des Zangenschenkels 7 in geschlossener Stellung gegenüber, siehe auch hierzu Fig.1.

Wie sich im Weiteren aus den Darstellungen der Fig. 1 und 3 ergibt, schließen der arbeitsbereichsseitige Abschnitt des Zangenschenkels 7, also der Abschnitt oberhalb der Drehachse 8 und der Abschnitt unterhalb der Drehachse 8, wenn man auf den Verlauf des Zangenschenkels beginnend unterhalb der Drehachse 8 bis zum Abbiegen in den Griffbereich 10 reduziert, einen Winkel α von ca. 112° ein. Bevorzugt ist jedenfalls ein Winkel im Bereich von 160° bis 75°, wobei auch bezüglich dieses Bereiches alle Zwischenwerte, insbesondere in 1°-Schritten bzw. 1°-Bereichsgrenzen-Schritten in die Offenbarung einbezogen sind.

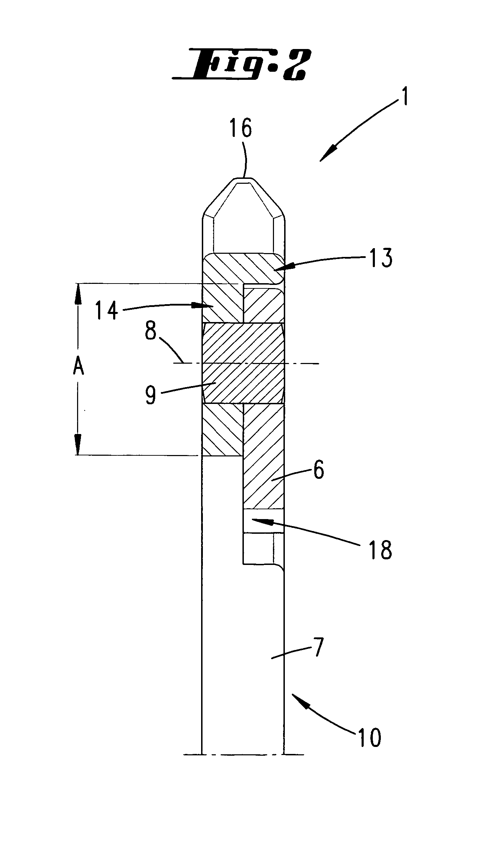

Die Querschnittsdarstellung der Fig. 2 zusammen auch mit den Darstellungen der Fig. 1, 3 und 4 lässt erkennen, dass ein vergleichsweise großer Bereich A konstruktiv realisiert ist, in welchem die Zangenschenkel bei der Drehung aufeinanderliegen. Dies unterstützt die Stabilität der Zange.

Der Zangenschenkel 7 bildet hierzu im Einzelnen eine Absenkung 18 aus, welche in nach außen offener Weise den aufliegenden Zangenschenkel 6, bezogen auf die Darstellung gemäß Fig. 2, umgreift.

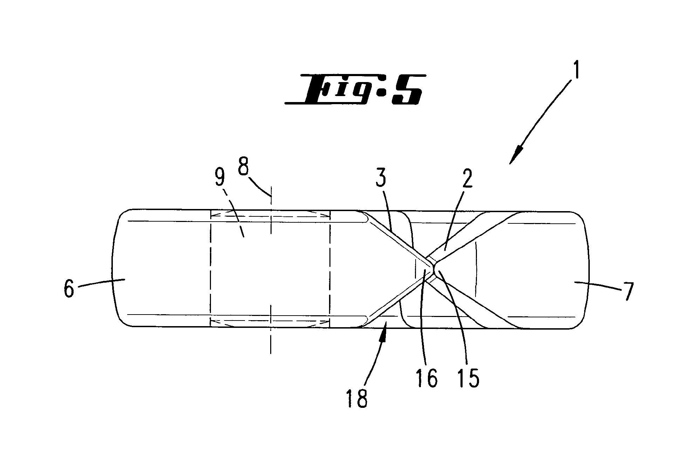

Der Zangenschenkel 6 verdickt sich jenseits, d. h. oberhalb und unterhalb des Auflagebereiches zu dem Zangenschenkel 7, derart, dass außerhalb des in der Darstellung gemäß Fig. 2 sichtbaren Bereiches sich eine gleiche Dicke zu dem Zangenschenkel 7 ergibt. Der U-Schenkel 12 ist über den Bereich, der bei maximal geöffneter Stellung, siehe Fig. 4, in Überdeckung zu dem Zangenschenkel 7 kommt, mit einer Dicke ausgebildet, welche der in Fig. 2 sichtbaren Dicke des Zangenschenkels 7 entspricht. Im Anschluss hieran, zu dem freien Ende 16 des Arbeitsbereiches 4 hin, verdickt sich sodann der Zangenschenkel, wie dies aus der Stirnansicht gemäß Fig. 5 auch ersichtlich ist.

## Patentansprüche

1. Zange, vorzugsweise Mittenschneider, mit zwei sich in einem eine Drehachse (8) ausbildenden Gewerbe kreuzend angeordneten Zangenschenkeln (6, 7), wobei beide Zangenschenkel (6, 7) auf einer Seite des Gewerbes zusammenwirkende, freie Enden (15,16) aufweisende Arbeitsbereiche (2, 3) ausbilden und auf der anderen Seite des Gewerbes Griffbereiche (10,11) aufweisen, wobei die Arbeitsbereiche (2,3) sich im Wesentlichen in einer Gesamterstreckungsrichtung der Zange erstrecken, die durch eine Erstreckungsrichtung der Griffbereiche (10,11) der Zangenschenkel (6, 7) vorgegeben ist, wobei weiter einer der Zangenschenkel (6) gewerbeseitig U-förmig ausgebildet ist, mit einem U-Schenkel verbindenden U-Steg, der eine zu den freien Enden der Arbeitsbereiche weisende Randkante ausbildet, wobei die Drehachse (8) einen der U-Schenkel (12) durchsetzt, wobei darüber hinaus ein Teilbereich (T1) eines Arbeitsbereiches (2) sich im Zuge der Öffnung der Zange (1), bezogen auf die Gesamterstreckungsrichtung der Zange (1) relativ zu der Drehachse (8) aus einem Bereich spitzenseitig der Zange (1) in einen Bereich griffbereichsseitig der Zange (1) bewegt, **dadurch gekennzeichnet, dass** jedenfalls die geometrische Drehachse (8) in Bezug zu der zu den freien Enden (15,16) der Arbeitsbereiche (2,3) weisenden Randkante (17) des U-Steges (14) zu den freien Enden (15,16) hin versetzt angeordnet ist.

2. Zange nach Anspruch 1, **dadurch gekennzeichnet, dass** die Arbeitsbereiche (2, 3) sich seitlich bezogen auf eine Längsachse der Zange befinden, welche Längsachse einer gemittelten Längserstreckung der Griffbereiche bzw. einer Griffachse einer die Griffbereiche umschließenden Hand entspricht.

3. Zange nach einem der vorhergehenden Ansprüche, **dadurch gekennzeichnet, dass** die Arbeitsbereiche (2,3) seitlich mit einem Abstand (a bzw. b) zu der Drehachse (8) verlaufen, wobei dieser Abstand entlang einer Senkrechten (S), gelegt durch die Drehachse (8) auf der Längsachse (L-L) der Zange gemessen ist.

4. Zange nach einem der vorhergehenden Ansprüche, **dadurch gekennzeichnet, dass** bei jedenfalls geschlossener Zange (1) der Arbeitsbereich (2) des U-förmig gebildeten Zangenschenkels (6), welcher Arbeitsbereich (2) mit seitlichem Abstand zu der Drehachse (8) verläuft, sich griffbereichsseitig bis über die Drehachse (8) hinaus in Richtung auf den U-Steg erstreckt.

5. Zange nach einem der vorhergehenden Ansprüche, **dadurch gekennzeichnet, dass** der die Drehachse (8) aufweisende U-Schenkel (12) des gewerbebereichseitig U-förmig gebildeten Zangenschenkels (6) an diesem U-Schenkel (12) keinen Arbeitsbereich ausbildet.

## Claims

1. Pliers, preferably centre cutters, having two plier limbs (6, 7) arranged so as to intersect in a joint which forms an axis of rotation (8), the two plier limbs (6, 7) forming, on one side of the joint, interacting working regions (2, 3) that have free ends (15, 16), and said plier limbs having handle regions (10,11) on the other side of the joint, the working regions (2, 3) extending substantially in a direction of extension of the pliers, which is specified by a direction of extension of the handle regions (10, 11) of the plier limbs (6, 7), in addition, one of the plier limbs (6) being formed in the shape of a U on the joint side, having a U-shaped crosspiece which connects the U-limbs and forms a peripheral edge facing towards the free ends of the working regions, the axis of rotation (8) passing through one of the U-limbs (12), in addition, a sub-region (T1) of a working region (2) moving, relative to the axis of rotation (8), with respect to the overall direction of extension of the pliers (1), out of a region at the tip of the pliers (1) into a region on the handle-region side of the pliers (1) during opening of the pliers (1), **characterised in that** the geometric axis of rotation (8) is always arranged so as to be offset towards the free ends (15, 16) with respect to the peripheral edge (17) of the U-shaped crosspiece (14) facing towards the free ends (15, 16) of the working regions (2, 3).

2. Pliers according to claim 1, **characterised in that** the working regions (2, 3) are located laterally with respect to a longitudinal axis of the pliers, which longitudinal axis corresponds to an averaged longitudinal extension of the handle regions or of a grip axis of a hand gripping the handle regions.

3. Pliers according to any of the preceding claims, **characterised in that** the working regions (2, 3) extend laterally with spacing (a or b) from the axis of rotation (8), this spacing being measured along a vertical line (S), laid through the axis of rotation (8) on the longitudinal axis (L-L) of the pliers.

4. Pliers according to any of the preceding claims, **characterised in that**, when the pliers (1) are closed in any case, the working region (2) of the U-shaped plier limbs (6), which working region (2) extends with lateral spacing from the axis of rotation (8), extends on the handle side in the direction of the U-shaped crosspiece beyond the axis of rotation (8).

5. Pliers according to any of the preceding claims, **characterised in that** the U-limb (12) of the plier limb (6) that is formed to be U-shaped on the joint region side, said U-limb having the axis of rotation (8), does not form a working region on this U-limb (12).

## Revendications

1. Pince, de préférence coupe-fil central, avec deux branches de pince (6, 7) disposées en se croisant au niveau d'une charnière formant un axe de rotation (8), dans laquelle les deux branches de pince (6, 7) forment d'un côté de la charnière des zones de travail (2, 3) présentant deux extrémités libres (15, 16) coopérantes et présentent de l'autre côté de la charnière des zones de préhension (10, 11), dans laquelle les zones de travail (2, 3) s'étendent essentiellement dans une direction d'extension globale de la pince, qui est fixée par la direction d'extension des zones de préhension (10, 11) des branches de pinces (6, 7), dans laquelle en outre une des branches de pince (6) est formée en forme de U du côté charnière, avec une âme en U associée à la branche en U, âme qui forme une arête de bord faisant face aux extrémités libres des zones de travail, dans laquelle l'axe de rotation (8) traverse une des branche en forme de U (12), dans laquelle, en plus de cela, une zone partielle (T1) d'une zone de travail (2) se déplace, en cours d'ouverture de la pince (1), relativement à l'axe de rotation (8) et d'une zone du côté de la pointe de la pince (1) dans une zone du côté de la zone de préhension de la pince (1), **caractérisée en ce que**, en tout cas, l'axe de rotation géométrique (8) est disposé au niveau des extrémités libres (15, 16) par rapport à l'arête de bord (17) de l'âme en U (14) faisant face aux extrémités libres (15, 16) des zones de travail (2, 3).

2. Pince selon la revendication 1, **caractérisée en ce que**, les zones de travail (2, 3) se trouvent sur le côté par rapport à un axe longitudinal de la pince, lequel axe longitudinal correspond à une extension longitudinale moyennée des zones de préhension, respectivement à un axe de préhension d'une main enserrant les zones de préhension.

3. Pince selon l'une des revendications précédentes, **caractérisée en ce que**, les zones de travail (2, 3) passent à côté de l'axe de rotation (8) avec une distance (a respectivement b), dans laquelle cette distance est mesurée le long d'une perpendiculaire (S) à l'axe longitudinal (L-L) de la pince, passant par l'axe de rotation (8).

4. Pince selon l'une des revendications précédentes, **caractérisée en ce que**, à chaque cas de pince fermée (1), la zone de travail (2) de la branche de pince formée en forme de U (6) s'étend, du côté de la zone de préhension, dans la direction de l'âme en U jusqu'au-delà de l'axe de rotation (8), laquelle zone de travail (2) passe à distance à côté de l'axe de rotation (8).

5. Pince selon l'une des revendications précédentes, **caractérisée en ce que** la branche en U (12) de la branche de la pince (6) formée en forme de U du côté de la zone de charnière, et présentant l'axe de rotation (8), ne forme aucune zone de travail au niveau de cette branche en U (12).
